# EUROPÄISCHE PATENTSCHRIFT

(11) **EP 3 940 239 B1**
(45) Veröffentlichungstag und Bekanntmachung des Hinweises auf die Patenterteilung: **25.02.2026**
(21) Anmeldenummer: 20210530.0
(22) Anmeldetag: 30.11.2020
(51) Int. Cl.: F04D 25/06, F04D 29/58, F04D 29/42, F04D 17/10, F02B 39/00, F02B 39/10, H02K 3/44, H02K 3/52, H02K 5/20, H02K 9/19, H02K 9/197, H02K 9/22, H02K 11/33

(54) **STRÖMUNGSMASCHINE MIT KÜHLKANAL**
TURBOMACHINE WITH A COOLING CHANNEL
TURBOMACHINE AVEC CANAL DE REFROIDISSEMENT

(30) Priorität: 16.07.2020 EP 20186303; 16.07.2020 EP 20186302
(43) Veröffentlichungstag der Anmeldung: 19.01.2022
(73) Patentinhaber: BMTS Technology GmbH & Co. KG, 70376 Stuttgart (DE)
(72) Erfinder: SOUCHON, Nicole, 73249 Wernau (DE); BLASCH, Philipp, 70188 Stuttgart (DE)
(74) Vertreter: Herrmann, Jochen

(56) Entgegenhaltungen:
- EP-A1- 0 878 897
- WO-A1-2020/116192
- DE-A1- 10 019 914
- FR-A1- 3 060 896
- KR-A- 20190 054 717
- US-A- 4 739 204
- US-A1- 2004 251 869
- US-A1- 2015 288 309

## Beschreibung

Die Erfindung betrifft eine Strömungsmaschine, insbesondere einen Verdichter oder eine Turbine, mit einer Antriebswelle, die mit einer elektrischen Maschine, insbesondere einem Elektromotor oder einem Generator gekoppelt ist und die ein Strömungsrad, insbesondere ein Verdichterrad oder ein Turbinenrad, mittelbar oder unmittelbar antreibt, wobei die elektrische Maschine einen Stator aufweist, der in einem Gehäuse aufgenommen und darin befestigt ist, wobei der Stator über Anschlussleitungen an eine außerhalb des Gehäuses angeordnete Stromversorgung angeschlossen oder anschließbar ist, wobei die Stromversorgung außerhalb des Gehäuses in einem Aufnahmebereich eines Elektronikgehäuses untergebracht ist, und wobei ein Kühlkanal vorgesehen ist, der eine Zulaufleitung und eine Ablaufleitung aufweist und der dazu hergerichtet ist ein Kühlfluid, insbesondere eine Kühlflüssigkeit, zu führen.

Ein solcher Verdichter ist aus US 2019/0195240 A1 bekannt. In diesem Dokument ist ein Verdichter beschrieben, der als Turbolader in Kraftfahrzeugen verwendet werden kann. Der Verdichter weist ein Gehäuse auf, an das einseitig ein Kompressorgehäuse angeflanscht ist. Auf der gegenüberliegenden Seite ist an das Gehäuse als Elektronikgehäuse ein Inverter-Gehäuse angebaut. Im Gehäuse ist ein Elektromotor angeordnet, der einen Rotor und einen Stator aufweist. Der Rotor ist mit Permanentmagneten des Elektromotors bestückt und trägt an einem Ende ein Verdichterrad, welches in dem Verdichter-Gehäuse angeordnet ist. Der Stator ist mit seinen Statorwicklungen an Strom-Führungsschienen kontaktiert, die im Übergangsbereich zwischen dem Gehäuse und dem Inverter-Gehäuse angeordnet sind. Mit der Strom-Führungsschiene ist ein Kontaktpin kontaktiert, der abgedichtet durch eine Durchführung des Inverter-Gehäuses hindurchgeführt ist. An seinem der Strom-Führungsschiene gegenüberliegenden Ende ist der Kontaktpin an eine weitere Stromschiene angeschlossen. Diese Stromschiene ist schließlich mit einer Anschlussleiste eines Inverters der Stromversorgung für den Elektromotor verschraubt, die in einem Aufnahmeraum des Elektronikgehäuses untergebracht ist. Das Elektronikgehäuse besitzt einen Gehäuseboden. Dieser ist mit einer Ausnehmung versehen, die zum Aufnahmeraum hin geöffnet ist. Die Ausnehmung kann mit einer Modulplatte der Stromversorgung abgedichtet verschlossen werden. Damit entsteht ein Kühlkanal, durch den, zur Kühlung der Stromversorgung, ein Kühlmedium zirkuliert werden kann. Der bekannte Verdichter nimmt einen relativ großen Bauraum ein und ist aufwendig konzipiert.

Aus US 2019/0195212 A1 ist ein elektromotorisch betriebener Verdichter bekannt. Dieser weist wieder ein Gehäuse auf, wobei der Stator eines Elektromotors in dem Gehäuse gehalten ist. Radial außenliegend zu einer Antriebsachse einer Antriebswelle, die ein Verdichterrad trägt, ist ein Elektronikgehäuse vorgesehen. Das Elektronikgehäuse bildet eine Aufnahme, in die die Stromversorgung für den Elektromotor eingebaut werden kann.

Zum Stand der Technik gehören weiter die Dokumente US 2004/251869 A1, FR 3 060 896 A1 und EP 0 878897 A1.

Es ist Aufgabe der Erfindung, eine Strömungsmaschine der eingangs erwähnten Art bereitzustellen, diemit kompakter Bauweise eine effiziente Kühlung der Stromversorgung für die elektrische Maschine ermöglicht.

Diese Aufgabe wird durch eine Strömungsmaschine gemäß Anspruch 1 gelöst.

Dadurch, dass es erfindungsgemäß vorgesehen ist, dass der Kühlkanal als Hohlraum in das Gehäuse eingeformt ist, lässt sich der Teileaufwand verringern. Zudem kann hierdurch der erforderliche Bauraum, den die Strömungsmaschine einnimmt, deutlich reduziert werden. Insbesondere kann der Hohlraum als geschlossener Raum ausgebildet sein, der alleine von dem Material des Gehäuses einteilig begrenzt ist. Dabei kann der Hohlraum in das Gehäuse eingeformt sein und mit der Umgebung lediglich über eine oder mehrere Zulaufleitungen und eine oder mehrere Ablaufleitungen für das Kühlmittel in Verbindung stehen. Insofern kann der Kühlkanal insbesondere als geschlossene Kavität in das Gehäuse eingeformt sein. Ein solches Gehäuse lässt sich einfach herstellen, beispielsweise als Gussteil, vorzugsweise unter Zuhilfenahme eines verlorenen Kerns, der den Hohlraum bildet. Bei dieser Bauweise wird gleichzeitig auch eine effektive Kühlung der im Aufnahmeraum des Elektronikgehäuses angeordneten Stromversorgung, insbesondere der Leistungselektronik und/oder der Regeleinheit (Controller), für dieElektrische Maschine, erreicht. Zu diesem Zweck ist der erste Kühlkanal-Bereich zwischen dem Stator und dem Elektronikgehäuse angeordnet. Auf diese Weise können sowohl der Stator als auch die Elektronik ihre Verlustwärme zumindest teilweise in den Kühlkanal abtauschen, wobei zugleich die platzsparende Bauweise unterstützt wird. Wenn eine einteilige Ausbildung des Gehäuses mit dem Elektronikgehäuse vorgesehen ist, dann wird der Teile- und Montageaufwand erheblich reduziert.

Zum Zwecke einer effektiven Wärmeabfuhr kann es insbesondere vorgesehen sein, dass die Projektionen des Stators und des Kühlkanals in Achsrichtung der Antriebswelle in eine gemeinsame Ebene sich zumindest bereichsweise überlappen, und/oder, dass die Projektionen des Aufnahmeraums oder der im Aufnahmeraum angeordneten Stromversorgung und des Kühlkanals in Achsrichtung der Antriebswelle in eine gemeinsame Ebene sich zumindest bereichsweise überlappen.

Für eine weiter verbesserte Kühlung des Stators kann es gemäß der Erfindung vorgesehen sein, dass der Kühlkanal einen zweiten Kühlkanal-Bereich aufweist, der zumindest bereichsweise in Umfangsrichtung um den Stator herum angeordnet ist. Dem entsprechend kann der Stator Verlustwärme in Umfangsrichtung und in Achsenrichtung in den Kühlkanal übertragen.

Eine erfindungsgemäße Strömungsmaschine kann auch so gestaltet sein, dass der erste Kühlkanalbereich und der zweite Kühlkanalbereich des Kühlkanals bei einem Schnitt durch die Achse der Antriebswelle in Schnittansicht unter Bildung eines gemeinsamen Hohlraums ineinander übergehen. Eine solche Bauweise lässt sich einfach fertigen. Es ist jedoch auch denkbar, dass der erste Kühlkanalbereich und der zweite Kühlkanalbereich des Kühlkanals von zwei räumlich getrennten Kanalstrukturen gebildet sind. Die beiden Kühlkanalbereiche lassen sich dann getrennt voneinander zu geeigneten Stellen des Gehäuses führen, die eine besonders wirkungsvolle Wärmeabfuhr ermöglichen. Selbstverständlich ist es im Rahmen der Erfindung auch möglich, nicht nur zwei Kühlkanalbereiche sondern auch noch einen oder mehrere weitere Kühlkanalbereiche vorzusehen.

Erfindungsgemäß wird eine besonders platzsparende Bauweise für die Strömungsmaschine dadurch verwirklicht, dass das Gehäuse und das Elektronikgehäuse einen gemeinsamen Gehäuseboden aufweisen, und dass sich der Kühlkanal zumindest bereichsweise innerhalb des Gehäusebodens erstreckt.

Hierbei kann es beispielsweise vorgesehen sein, dass der Kühlkanal auf seiner dem Elektronikgehäuse zugewandten Seite von einem Wandabschnitt des Gehäuses, insbesondere des Gehäusebodens, begrenzt ist. Erfindungsgemäß ist der Kühlkanal auf seiner dem Stator zugewandten Seite von einem Wandbereich des Gehäuses, insbesondere des Gehäusebodens, begrenzt.

Wenn der Stator und die Stromversorgung entsprechend angeordnet sind, können sie ihre Verlustwärme über den Wandbereich bzw. den Wandabschnitt übertragen.

Zu diesem Zweck kann die Konstruktion der Strömungsmaschine so ausgelegt sein, dass auf der dem Kühlkanal abgewandten Seite des Wandabschnitts eine elektrische Komponente, insbesondere ein Teil der Stromversorgung, angeordnet ist, wobei vorzugsweise vorgesehen ist, dass die elektrische Komponente den Wandabschnitt kontaktiert. Die Kontaktierung des Wandabschnitts mit der elektrischen Komponente kann dabei so gelöst sein, dass sie direkt auf dem Wandabschnitt körperlich aufsitzt. Es ist auch denkbar, dass ein mittelbarer Kontakt vorgesehen ist, wobei zwischen dem Wandabschnitt und der elektrischen Komponente ein wärmeleitendes Zwischenelement eingesetzt ist. Als wärmeleitendes Zwischenelement ist beispielsweise die Verwendung einer wärmeleitenden Paste denkbar. Weiterhin kann sowohl ein direkter als auch ein mittelbarer Kontakt zwischen der elektrischen Komponente und dem Wandabschnitt vorgesehen sein.

Eine besonders bevorzugte Erfindungsvariante ist dergestalt, dass an den Wandabschnitt und/oder den Wandbereich wenigstens ein Vorsprung angeformt ist, der über den Wandabschnitt und/oder den Wandbereich übersteht und der in den Kühlkanal hineinragt. Diese Vorsprünge bilden Turbulatoren, die für eine verbesserte Durchmischung des Kühlmittels im Kühlkanal sorgen. Beispielsweise können die Vorsprünge zu diesem Zweck an ihrem Außenumfang gewölbt, beispielsweise zylindrisch, ausgebildet sein. Weiterhin wird durch die Vorsprünge die zur Verfügung stehende Fläche für den Wärmetausch vergrößert.

Den Vorsprüngen kann beispielsweise noch eine weitere Funktionalität zugeordnet werden, wenn vorgesehen ist, dass eine Befestigungsaufnahme im Wandabschnitt vorgesehen ist, die sich bis in den Vorsprung hinein erstreckt und die von dem Aufnahmeraum des Elektronikgehäuses her zugänglich ist, und dass ein Befestigungsmittel in die Befestigungsaufnahme eingesetzt ist, insbesondere zur Befestigung der Stromversorgung oder eines Teils der Stromversorgung an dem Wandabschnitt, und/oder dass eine Befestigungsaufnahme im Wandbereich vorgesehen ist, die sich bis in den Vorsprung hinein erstreckt und die von dem Aufnahmeraum des Gehäuses her zugänglich ist, und dass ein Befestigungsmittel in die Befestigungsaufnahme eingesetzt ist, insbesondere zur Befestigung des Stators an dem Wandbereich. Bei solchen Erfindungsvarianten kann der Wandabschnitt und/oder der Wandbereich besonders dünnwandig ausgebildet werden. Dabei lassen sich dennoch die Befestigungsstellen für die Stromversorgung oder den Stator für eine günstige Wärmeübertragung an dem Wandabschnitt und/oder dem Wandbereich verwirklichen.

Besonders vorteilhafte Ergebnisse für eine effektive Wärmeübertragung über den Wandabschnitt bzw. den Wandbereich hinweg haben sich dann ergeben, wenn vorgesehen ist, dass die in Achsrichtung der Antriebswelle verlaufende Wandstärke des Wandabschnitts und/oder die in Achsrichtung der Antriebswelle verlaufende Wandstärke des Wandbereichs mindestens 2,5 mm und maximal 4 mm, besonders bevorzugt 2,5 mm bis 3 mm beträgt, wobei das den Wandabschnitt bildende Material und/oder das den Wandbereich bildende Material ein nichtmagnetisierbarer Metallwerkstoff, insbesondere nichtmagnetische Leichtmetalllegierungen, z.B. Aluminium bzw. eine Aluminiumlegierung, Titan bzw. eine Titanlegierung, Magnesium bzw. eine Magnesiumlegierung oder Kunststoff, insbesondere ein faserverstärkter Kunststoff, ist.

Erfindungsgemäß ist der Stator in dem Gehäuse zumindest teilweise in eine Vergussmasse eingebettet, und die Vergussmasse steht in Kontakt mit dem Gehäuse, vorzugsweise mit dem Gehäuseboden steht. Hierbei ist es mithin vorgesehen, dass der Stator in dem Gehäuse in einer Vergussmasse eingebettet ist. Hierdurch wird zum einen der Stator zuverlässig im Gehäuse fixiert. Zum anderen kann die Vergussmasse als Wärme-Leitelement dienen. Somit kann die während des Betriebs entstehende Verlustleistung in Form von Wärme über die Vergussmasse in das Gehäuse und den Kühlkanal abgeführt werden. Die Montage kann dabei einfach durchgeführt werden. Entsprechend wird der Stator in das Gehäuse eingelegt und anschließend die Vergussmasse in das Gehäuse eingegossen, sodass der Stator an den gewünschten Stellen in die Vergussmasse eingebettet ist. Abschließend kann die Vergussmasse dann aushärten. Als Vergussmasse kann eine Kunststoffmasse zum Einsatz kommen, die als Duromer ausgebildet sein kann und ein Gemisch aus Harz und Härter aufweist. Dieses Material kann entsprechend niedrig viskos angemischt werden und fließt auch in unzugängliche Bereiche des Gehäuses, um den Stator einzubetten. Die Vergussmasse ist vorzugsweise elektrisch nicht leitend bzw. isolierend ausgebildet. Vorzugsweise wird die Vergussmasse gebildet von einem Epoxidharz mit hoher thermischer Leitfähigkeit, z.B. einem keramisch gefüllten Epoxidharz.

Erfindungsgemäß ist es weiterhin vorgesehen, dass die Vergussmasse nicht nur den Stator zumindest teilweise aufnimmt, sondern diese auch gleichzeitig ein Dichtstück bildet, welches die Anschlussleitung der Statorwicklung der elektrischen Maschine gegenüber einer Durchführung des Gehäuses abdichtet. Durch die Durchführungen können die Anschlussleitungen zu den Statorwicklungen in das Elektronikgehäuse hinein geleitet und mit den Statorwicklungen kontaktiert werden. Die Durchführung kann dabei beispielsweise eine Verbindung zwischen dem Gehäuse und dem Elektronikgehäuse bilden. Entsprechend kann das Dichtstück in einem Arbeitsschritt zusammen mit der Fixierung des Stators mit der Vergussmasse gefertigt werden. Hierdurch können aufwändige Zusatzelemente, wie sie beim Stand der Technik notwendig sind, eingespart werden. Auf diese Weise verringert sich der Teile- und Montageaufwand erheblich. Besonders bevorzugt ist das Dichtstück einteilig mit dem Bereich der Vergussmasse ausgebildet, welcher den Stator zumindest teilweise aufnimmt. Auf diese Weise wird eine feste Zuordnung des Stators zu den durch die Durchführungen hindurchgeführten Anschlussleitungen geschaffen. Diese feste Zuordnung erhöht die Betriebssicherheit. Insbesondere wird dadurch eine Einheit erzeugt, die wenig anfällig gegenüber Korrosion und insbesondere auch Vibrationen ist.

Gemäß einer bevorzugten Erfindungsvariante kann es vorgesehen sein, dass die Anschlussleitungen, insbesondere jede der Anschlußleitungen pro Phase, jeweils einstückig ausgebildet sind und durch die Durchführung hindurch aus dem Gehäuse herausgeführt sind. Die Anschlussleitung kann einfach mit dem Dichtstück in der Durchführung fixiert werden. Zudem wird die Anzahl der elektrischen Verbindungsstellen reduziert, sodass die gesamte Konstruktion weniger anfällig gegenüber Korrosion und Vibrationen ist.

Insbesondere für Verdichter in Form von Turboladern hat sich ergeben, dass eine effektive Wärmeabfuhr vom Stator dann ausreichend gewährleistet werden kann, wenn vorgesehen ist, dass die Vergussmasse eine Wärmeleitfähigkeit im Bereich zwischen 0,5 W/(m*K) und 5 W/(m*K) aufweist.

Eine gute Zugänglichkeit des Elektronikgehäuses für Montage- und Wartungszwecke kann dann erreicht werden, wenn vorgesehen ist, dass das Elektronikgehäuse eine Seitenwand aufweist, die gegenüberliegend dem Gehäuse eine Öffnung bildet, wobei die Öffnung von einer vorzugsweise abnehmbaren Abdeckung verschlossen ist, wobei bevorzugt die Seitenwand einen seitlichen Durchbruch zur Aufnahme einer Stromzuleitung aufweist.

Eine gute Zugänglichkeit des Gehäuses für Montage- und Wartungszwecke kann dann erreicht werden, wenn vorgesehen ist, dass das Gehäuse gegenüberliegend dem Elektronikgehäuse eine Öffnung bildet, wobei die Öffnung von einem vorzugsweise abnehmbaren Deckel verschlossen ist.

Die Erfindung wird im Folgenden anhand von in den Zeichnungen dargestellten Ausführungsbeispielen näher erläutert. Es zeigen:
Figur 1 in Seitenansicht und im Schnitt einen elektromotorisch betriebenen Verdichter,
Figur 2 einen Teilschnitt längs des in Figur 1 mit II-II markierten Schnittverlaufs,
Figur 3 eine Detaildarstellung einer zweiten Ausgestaltungsvariante,
Figur 4 eine Detaildarstellung einer dritten Ausgestaltungsvariante,
Figur 5 ein in Figur 1 mit V markiertes Detail,
Figur 6 eine Detaildarstellung einer erfindungsgemäßen Variante in einem in Figur 1 mit VI markiertem Bereich und
Figur 7 eine alternative Ausgestaltungsvariante eines elektrisch betreibbaren Verdichters.

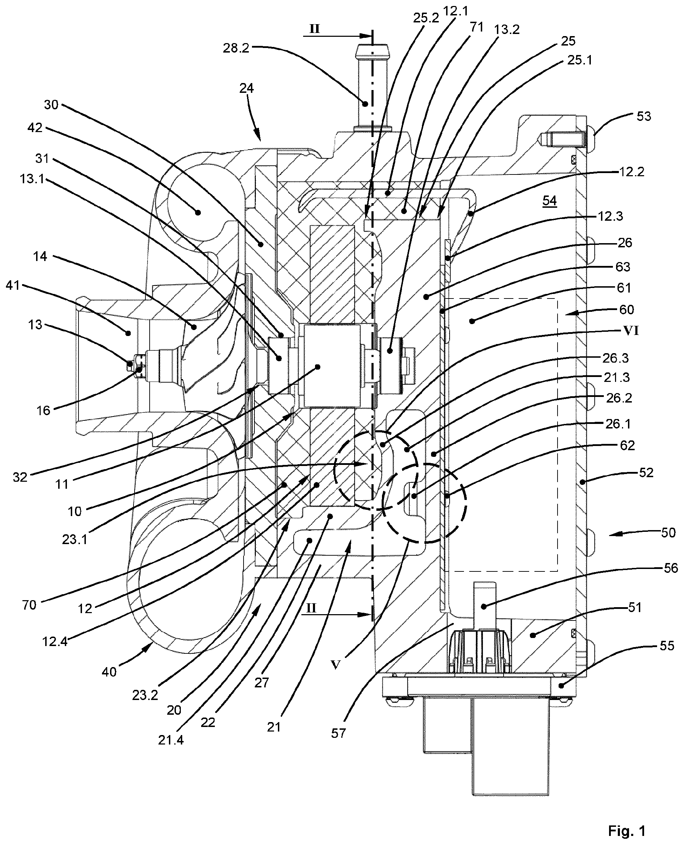

Figur 1 zeigt einen erfindungsgemäßen elektromotorisch betriebenen Verdichter. Als Verdichter sollen im Rahmen der Erfindung insbesondere Turbolader verstanden werden. Dabei kann es sich auch um einen Abgas-Turbolader handeln. Bei Abgasturboladern sind mit einer Antriebswelle 13 ein Verdichterrad 14 und zusätzlich eine Turbine gekoppelt. Die Turbine wird dabei im Abgasstrom insbesondere eines Verbrennungsmotors betrieben. Erfindungsgemäße Verdichter können auch zur Versorgung von Brennstoffzellen mit einem Gasstrom Verwendung finden.

Wie Figur 1 zeigt, weist der Verdichter eine Antriebswelle 13 auf. Diese Antriebswelle 13 ist mittels Lagern 13.1, 13.2 in einem Gehäuse 20 drehbar gelagert. Eines oder beide Lager 13.1, 13.2 können von Wälzkörperlagern, beispielsweise Kugellagern, gebildet sein. Im Rahmen der Erfindung ist es weiterhin denkbar, dass eines oder beide Lager 13.1, 13.2 als hydrodynamische Gleitlager ausgebildet sind.

Das Gehäuse 20 weist einen Gehäuseboden 26 auf. Eines der beiden Lager 13.1, 13.2 ist vorzugsweise in dem Gehäuseboden 26 montiert.

Die Antriebswelle 13 trägt einen Rotor 11 einer elektrischen Maschine 10. nämlich eines Elektromotors. Der Rotor 11 ist dabei drehfest mit der Antriebswelle 13 verbunden. Der Rotor 11 ist mit Permanentmagneten bestückt, die über den Umfang des Rotors 11 verteilt bzw. diesen umgebend angeordnet sind.

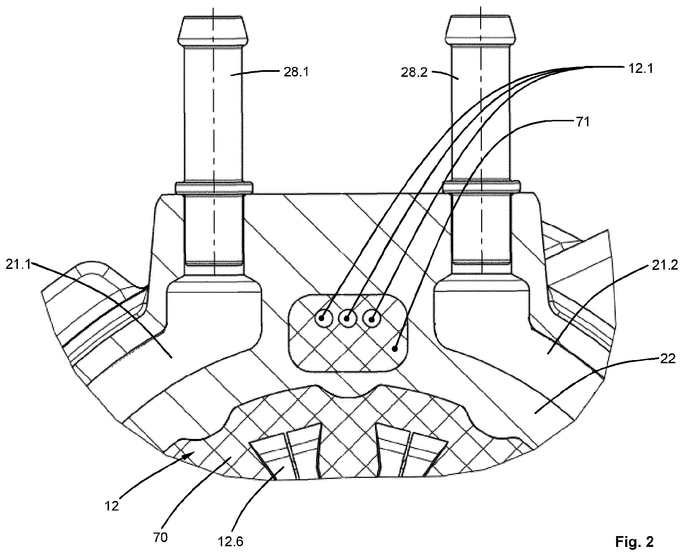

Der Elektromotor 10 weist weiterhin einen Stator 12 auf. Dieser Stator 12 weist vorzugsweise einen Statorkern 12.4, beispielsweise ein Blechpaket auf, welches aus Blechlamellen zusammengesetzt ist. Vorzugsweise ist das Blechpaket als stanzpaketiertes Blechpaket ausgebildet. Der Stator besitzt Statorwicklungen 12.6 (siehe Figur 2). Diese Statorwicklungen werden jeweils von einem Draht gebildet. Jede dieser Statorwicklungen besitzt eine Anschlussleitung 12.1. Die Anschlussleitung 12.1 ist dabei abhängig von der Stromstärke und Frequenz von einem Draht, einem Kabel oder einer Stromschiene gebildet.. Das zweite Ende der Anschlussleitung 12.1 ist über einen Masseanschluss an das Gehäuse 20 angeschlossen.

Die Antriebswelle 13 trägt endseitig ein Strömungsrad 14 in Form eines Verdichterrads. Das Strömungsrad 14 ist mittels eines Befestigungselements 16 drehfest mit der Antriebswelle 13 verbunden.

Wie Figur 1 zeigt, ist das Strömungsrad 14 in einem Verdichtergehäuse 40 untergebracht. Das Verdichtergehäuse 40 weist einen Ansaugbereich 41 auf. Über diesen Ansaugbereich 41 kann ein Gas, im vorliegenden Ausführungsbeispiel Luft, angesaugt werden. Das Gas wird mit dem Strömungsrad 14 komprimiert und in einen spiralförmig im Verdichtergehäuse 40 verlaufenden Verdichterkanal 42 geführt. Der Verdichterkanal 42 weist einen Auslass auf. Über diesen Auslass kann das komprimierte Gas abgeführt und einer Arbeitsmaschine, beispielsweise einem Verbrennungsmotor oder einer Brennstoffzelle, zugeführt werden.

Das Gehäuse 20 ist topfförmig ausgebildet und weist eine umlaufende Seitenwand 27 auf, die von dem Gehäuseboden 26 aufsteigt.

In das Gehäuse 20 ist ein Hohlraum eingebracht, der einen Kühlkanal 21 bildet.

Dabei ist der Kühlkanal 21 als Kavität ausgebildet, der allseitig von dem Material, welches das Gehäuse 20 bildet, umgeben ist. Insbesondere ist der Kühlkanal 21 einteilig in das Gehäuse 20 eingeformt.

Der Kühlkanal 21 erstreckt sich zumindest bereichsweise im Bereich des Gehäusebodens 26 und vorzugsweise zumindest bereichweise im Bereich der Wandung 27. Der Kühlkanal 21 kann dabei so ausgebildet sein, dass er im Wesentlichen ringförmig den Aufnahmebereich des Gehäuses 20 umgibt.

Gemäß der Erfindung ist es so, dass der Kanal 21 einen ersten Kühlkanal-Bereich 21.3 aufweist, der zwischen dem Stator 12 und dem Aufnahmeraum 54 des Elektronikgehäuses 50 angeordnet ist. Die Projektionen des Stators 12 und des ersten Kühlkanal-Bereichs 21.3 in Achsrichtung der Antriebswelle 13 in eine gemeinsame Ebene überlappen sich zumindest bereichsweise, wie dies Figur 1 zeigt.

Vorzugsweise ist es weiterhin so, dass sich die Projektion des Aufnahmeraums 54, insbesondere des Bereichs des Aufnahmeraums 54 in dem die Stromversorgung 60 untergebracht ist, und die Projektion des ersten Kühlkanal-Bereichs 21.3 in Achsrichtung der Antriebswelle 13 in eine gemeinsame Ebene sich zumindest bereichsweise überlappen. In dem gezeigten Ausführungsbeispiel umfasst die Stromversorgung 60 beispielsweise eine Leiterplatte 63 und darauf montierte Elektronikbauteile 61. Insbesondere überlappen sich die Projektion der Leiterplatte 63 und die Projektion des ersten Kühlkanal-Bereichs 21.3 in Achsrichtung der Antriebswelle 13 in eine gemeinsame Ebene sich zumindest bereichsweise.

Wie Figur 1 weiter zeigt, ist ein zweiter Kanalbereich 21.4 des Kühlkanals 21 vorgesehen, der den Stator 12 zumindest bereichsweise in Umfangsrichtung des Stators 12 umgibt.

Der erste Kühlkanal-Bereich 21.3 geht unmittelbar in den zweiten Kühlkanal-Bereich 21.4 über. Es kann jedoch auch vorgesehen sein, dass der erste Kühlkanal-Bereich 21.3 und der zweite Kühlkanal-Bereich 21.4 zumindest bereichsweise voneinander getrennt im Gehäuse 20 geführt sind.

Wie Figur 2 erkennen lässt, weist der Kühlkanal 21 einen Vorlauf 21.1 und einen Rücklauf 21.2 auf. Im Bereich zwischen Vorlauf 21.1 und Rücklauf 21.2 ist die ringförmige Kontur des Kühlkanals 21 unterbrochen. Der Vorlauf 21.1 ist über eine Zulaufleitung 28.1 und der Rücklauf 21.2 über eine Ablaufleitung 28.2 an eine Kühlmittelversorgung anschließbar. Dementsprechend bilden die Zulaufleitung 28.1 und die Ablaufleitung 28.2 Anschlussstücke für die Kühlmittelversorgung. Das Kühlmittel kann über die Zulaufleitung 28.1 in den Vorlauf 21.1 strömen und durch den Kühlkanal 21 fließen. Das Kühlmittel verlässt den Kühlkanal 21 durch den Rücklauf 21.2 und die Ablaufleitung 28.2.

Wie die Figuren 1 und 2 erkennen lassen, bildet die Seitenwand 27 eine Innenwand 22, die den Aufnahmeraum des Gehäuses 20 umgibt. Die Innenwand 22 grenzt unmittelbar an den Kühlkanal 21 an.

Der Stator 12 ist in dem Aufnahmeraum des Gehäuses 20 positioniert. Zur Befestigung des Stators 12 in dem Aufnahmeraum wird eine Vergussmasse 70 verwendet. Diese Vergussmasse 70 füllt den Aufnahmeraum des Gehäuses 20 zumindest bereichsweise aus. Dabei kann es so sein, dass die Vergussmasse 70 zwei Aufnahmebereiche 23.1, 23.2 bildet. Der erste Aufnahmebereich 23.1 ist dabei zwischen dem Gehäuseboden 26 und dem Stator 12 angeordnet. Der zweite Aufnahmebereich 23.2 ist im Bereich zwischen dem Strömungsrad 14 und dem Stator 12 gebildet.

An seinem Außenumfang stützt sich der Stator 12 mit seinem Statorkern gegenüber der Seitenwand 27 ab. Zusätzlich sind ein Anschlag und eine Zentrierung an der Seitenwand 27 ausgebildet. An diesem Anschlag bzw. der Zentrierung ist der Stator 12 in Achsrichtung der Antriebswelle 13 abgestützt. Somit kann der Stator 12 durch eine Gehäuseöffnung 24 des Gehäuses 20 in den Aufnahmebereich des Gehäuses 20 eingesetzt werden. Die Einsetzbewegung wird durch den Anschlag bzw. die Zentrierung in axialer bzw. radialer Richtung begrenzt, sodass der Stator 12 exakt im Gehäuse 20 ausgerichtet ist.

Zur Fixierung des Stators 12 ist die Vergussmasse 70 verwendet. Die Vergussmasse 70 bildet zudem ein Dichtstück 71 aus, welches eine Durchführung 25 im Gehäuseboden 26 ausfüllt. Das Dichtstück 71 ist einteilig mit zumindest einem der Aufnahmebereiche 23.1, 23.2 ausgebildet. Für die Fertigung kann entsprechend eine flüssige Vergussmasse 70 in den Aufnahmeraum des Gehäuses 20 eingefüllt werden, sodass die entsprechenden Aufnahmebereiche 23.1, 23.2 und die Durchführung 25 gefüllt werden. Anschließend wird die Vergussmasse 70 zur Aushärtung gebracht, sodass sich ein fester Vergussmasse-Körper ergibt.

Wie Figur 1 weiter erkennen lässt, sind die Anschlussleitungen 12.1 der Statorwicklungen durch die Durchführung 25 hindurchgeführt und in das Dichtstück 71 eingebettet. Das Dichtstück 71 bildet mithin eine Dichtung, über die die Anschlussleitungen 12.1 abgedichtet aus dem Gehäuse 20 herausgeführt sind. Durch die adhäsive Verbindung zwischen dem Dichtstück 71 und den Anschlussleitungen 12.1 kann nicht nur eine Dichtung, sondern auch eine Zugentlastung für die Anschlussleitungen 12.1 erreicht werden.

Figur 1 zeigt, dass die Durchführung 25 als Durchbruch im Gehäuseboden 26 ausgebildet sein kann. Die Durchführung 25 weist zwei Öffnungen 25.1, 25.2 auf, zwischen denen sich das Dichtstück 71 erstreckt. Dabei kann es so sein, dass das Dichtstück 71 den Bereich zwischen den Öffnungen 25.1, 25.2 vollständig oder teilweise ausfüllt.

Wie Figur 1 weiter zeigt, kann das Gehäuse 20 im Bereich seiner Gehäuseöffnung mit einem Deckel 30 verschlossen werden. Für die abgedichtete Zuordnung des Deckels 30 zu dem Gehäuse 20 eine Dichtelementaufnahme vorgesehen sein, die eine Dichtung aufnimmt. Mit nicht gezeigten Befestigungselementen wird der Deckel 30 mit dem Gehäuse 20 verbunden. Der Deckel 30 ist mit einem Durchbruch 32 versehen, durch den die Antriebswelle 13 hindurchgeführt ist.

Der Verdichter weist weiterhin ein Elektronikgehäuse 50 auf. Das Elektronikgehäuse 50 wird von einer umlaufenden Seitenwand 51 begrenzt. Vorzugsweise schließt sich diese Seitenwand 51 einteilig an den Gehäuseboden 26 an. Das Elektronikgehäuse 50 kann ebenfalls topfförmig ausgebildet sein. Es weist eine Öffnung auf, die von der umlaufenden Seitenwand 51 begrenzt ist. Dabei ist die Öffnung des Elektronikgehäuses 50 gegenüberliegend der Gehäuseöffnung 24 des Gehäuses 20 angeordnet. Die Öffnung des Elektronikgehäuses 50 kann mit einer Abdeckung 52 verschlossen werden. Hierzu kann die Seitenwand 51 mit Gewindeaufnahmen versehen seien. Fluchtend zu den Gewindeaufnahmen weist die Abdeckung 52 Schraubaufnahmen auf. Durch diese sind Befestigungsschrauben 53 hindurchgeführt und in die Gewindeaufnahmen eingeschraubt. Vorzugsweise ist die Abdeckung 52 gegenüber der Seitenwand 51 abgedichtet.

Das Elektronikgehäuse 50 umgibt einen Aufnahmebereich 54. In diesem Aufnahmebereich 54 ist eine Leiterplatte 63 angeordnet. Die Leiterplatte 63 kontaktiert vorzugsweise den Gehäuseboden 26 und kann mit diesem über Befestigungsmittel 62 verbunden werden. Auf diese Weise wird ein wärmeleitender Kontakt zwischen dem Gehäuseboden 26 und der Leiterplatte 63 geschaffen. Verlustwärme, die an der Leiterplatte 63 ansteht, kann dann über den Gehäuseboden 26 in den Kühlkanal 21 abgetauscht werden.

Vorzugsweise ist es dabei auch denkbar, dass zwischen der Leiterplatte 63 und dem Gehäuseboden 26 eine thermisch leitfähige Paste zur Reduktion des thermischen Widerstands angeordnet ist. Damit wird die Kühlleistung weiter verbessert.

Denkbar ist es auch, dass zwischen der Leiterplatte 63 und dem Gehäuseboden 26 ein Wärmeverteil-Element, beispielsweise ein plattenförmiges Element aus einem gut wärmeleitfähigen Material, beispielsweise Kupfer oder Aluminium, oder eine Dampfkammer (sog. Vapour Chamber) vorgesehen ist. Denkbar ist hier der Einsatz eines sogenannten Heatspreaders, wie er aus der Halbleitertechnik prinzipiell bekannt ist. Dieses Wärmeverteil-Element kann auch zusätzlich beidseitig auf seinen der Leiterplatte 63 und dem Gehäuseboden 26 zugewandten Seiten mit einer wärmeleitfähigen Paste versehen werden, um einen verbesserten Kontakt zu diesen Komponenten herzustellen.

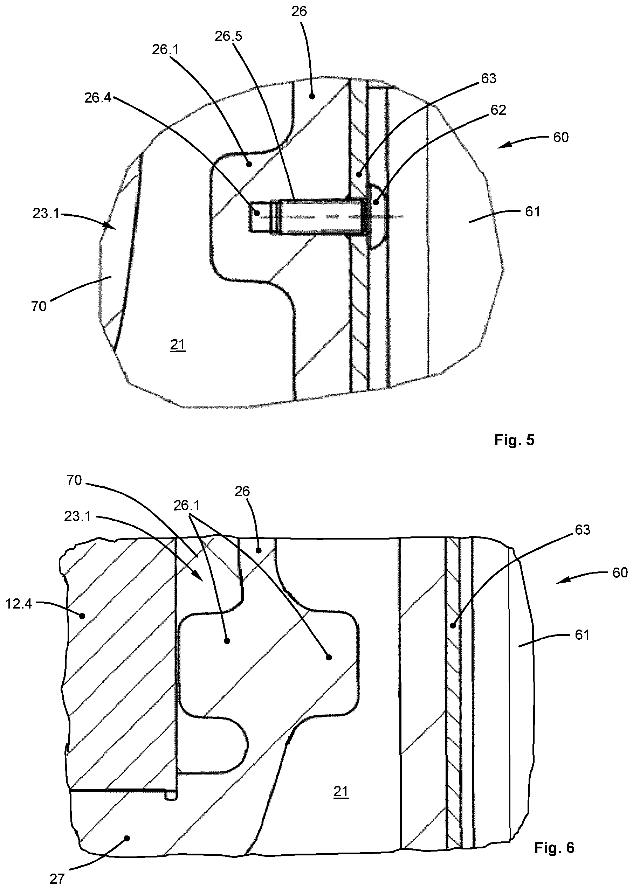

Wie Figur 1 zeigt, kann es auch vorgesehen sein, dass der Gehäuseboden 26 einen oder mehrere Vorsprünge 26.1 aufweist, die in den Kühlkanal 21 hineinragen. Die Vorsprünge 26.1 stehen vorzugsweise von einem Wandabschnitt 26.2 des Gehäusebodens 26 ab, der sich an den Aufnahmeraum 54 des Elektronikgehäuses 50, insbesondere an den Bereich, in dem die Leiterplatte 63 gehalten ist, anschließt. Hierdurch wird die wirksame Fläche zum Tausch der Verlustwärme vergrößert. Besonders bevorzugt kann es dabei vorgesehen sein, wie Figur 5 zeigt, dass der Vorsprung 26.1 eine Befestigungsaufnahme 26.4, beispielsweise in Form einer Schraubaufnahme, aufweist. **In** das Gewinde dieser Schraubaufnahme ist das als Befestigungsschraube ausgebildete Befestigungsmittel 62 eingeschraubt. Hierdurch kann der Übergangsbereich des Gehäusebodens 26 zwischen dem Aufnahmeraum 54 und dem Kühlkanal 21, zum Zweck einer verbesserten Wärmeübertragung, dünnwandig ausgebildet werden.

Figur 1 zeigt weiterhin, dass der Kühlkanal 21 im Gehäuse 20 so ausgebildet ist, dass im Übergangsbereich zwischen dem Aufnahmeraum des Gehäuses 20 und dem Kühlkanal 21 ein Wandbereich 26.3 gebildet ist. Auch der Wandbereich 26.3 ist dünnwandig ausgebildet, um einen guten Wärmeübergang zum Stator 12 hin zu ermöglichen.

Vorzugsweise beträgt die Wandstärke des Wandabschnitts 26.2 und/oder des Wandbereichs 26.3 im Bereich zwischen 2,5 Millimeter und 4 Millimeter, wobei das Material des Gehäusebodens 26 vorzugsweise aus einem nicht magnetisierbaren Werkstoff, z.B. Aluminium bzw. einer Aluminiumlegierung, Titan bzw. einer Titanlegierung oder Magnesium bzw. einer Magnesiumlegierung besteht. Weiterhin bilden die Vorsprünge 26.1, die in den Kühlkanal 21 hineinragen, Elemente, welche die Strömung im Kühlkanal 21, beeinflussen. Die Vorsprünge 26.1 bilden somit Turbulatoren, die für eine bessere Durchmischung des Kühlmediums (beispielsweise Kühlwasser) im Kühlkanal 21 sorgen. Damit die Vorsprünge 26.1 zur Verwirklichung dieser Aufgabe dem Kühlmittel keinen zu großen Strömungswiderstand entgegensetzen, können sie einen zylindrischen Außenumfang aufweisen. Alternativ ist es ebenso vorstellbar, dass die Vorsprünge 26.1 entlang der Strömungsrichtung des Kühlmittels einen strömungsoptimierten, länglichen, z.B. elliptischen, Querschnitt aufweisen.

Zusätzlich oder alternativ zu den von dem Wandabschnitt 26.2 des Gehäusebodens 26 abstehenden Vorsprüngen 26.1 ist es erfindungsgemäß vorgesehen, dass wenigstens ein Vorsprung 26.1 von dem Wandbereich 26.3 absteht. In einer besonders vorteilhaften Ausführung kann es vorgesehen sein, dass, wie in Figur 6 gezeigt, die von dem Wandabschnitt 26.2 abstehenden Vorsprünge 26.1 sowohl in den Kühlkanal 21 als auch in den Aufnahmeraum des Gehäuses 20 ragen. Auf diese Weise kann eine verbesserte Wärmeabfuhr vom Stator 12 in das Kühlmittel erfolgen.

Erfindungsgemäß kontaktiert dabei zumindest einer der von dem Wandabschnitt 26.2 abstehenden Vorsprünge 26.1 den Stator 12, und zwar den Statorkern 12.4. Die den Aufnahmeraum des Gehäuses 20 ragenden Vorsprünge 26.1 können axiale Anschläge für den Statorkern 12.4 bilden. In der in Figur 6 gezeigten Erfindungsvariante kontaktieren die von dem Wandabschnitt 26.2 in den Aufnahmeraum des Gehäuses 20 ragenden Vorsprünge 26.1 die Statorkern 12.4 im Bereich der Statorzähne.

Die Seitenwand 51 des Elektronikgehäuses 50 kann mit einem Durchbruch 57 versehen sein. Durch diesen Durchbruch 57 hindurch lässt sich eine Stromleitung 56, z.B. mittels eines Steckkontaktes, hindurchführen. Mittels der Stromleitung 56 werden auf der Leiterplatte 63 angeordnete Elektronikbauteile 61 der Stromversorgung 60 kontaktiert und an eine externe Spannungsversorgung angeschlossen. Die Stromversorgung 60 ist im vorliegenden Ausführungsbeispiel mit einem Inverter ausgestattet. Mit dem Inverter kann der von der Stromleitung 56 zugeführte Gleichstrom in eine Wechselspannung transformiert werden, die den Statorwicklungen 12.6 über die Anschlussleitungen 12.1 zugeleitet wird. Zur Zugentlastung der Stromleitung 56 und zur verbesserten Montage des Verdichters ist ein Anschlussstück 55 beispielsweise in Form einer Steckdose verwendet. Dieses kann seitlich mit dem Elektronikgehäuse 50 verschraubt werden.

Die Leiterplatte 63 lässt sich zusammen mit den Elektronikbauteilen 61 durch die offene Seite des Elektronikgehäuses 50 in den Aufnahmebereich 54 einsetzen.

Wie Figur 1 zeigt, weisen die Anschlussleitungen 12.1 Leitungsenden 12.2 auf. Diese sind über eine Verbindung 12.3 mit der Leiterplatte 63 elektrisch kontaktiert.

Die Verbindung 12.3 kann im einfachsten Fall von einer elektrisch leitenden stoffschlüssigen Verbindung, vorzugsweise einer Lotverbindung, gebildet werden. Denkbar ist es auch hier eine Crimpverbindung vorzusehen.

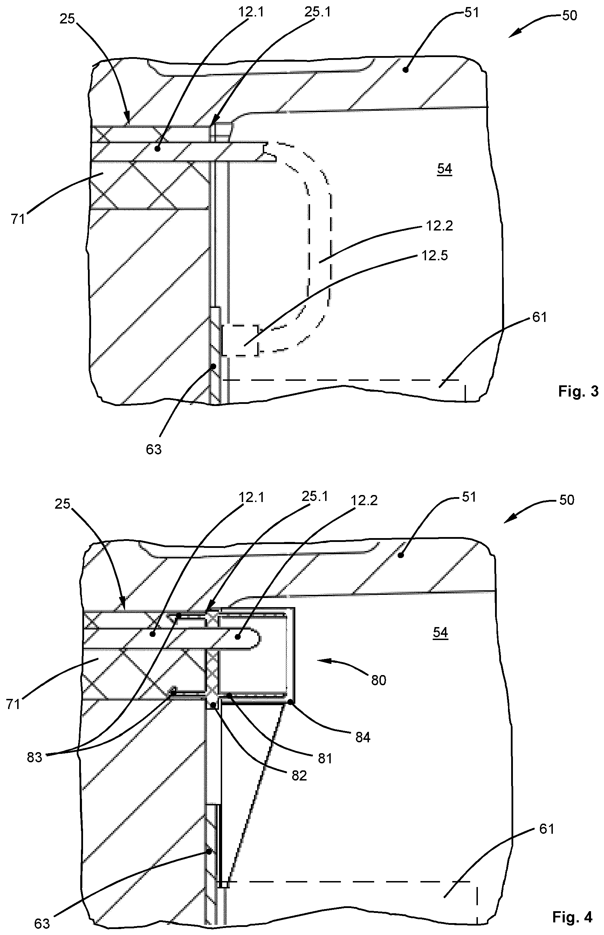

Wie Figur 3 zeigt, kann es auch vorgesehen sein, dass die Anschlussleitungen 12.1 mit ihren Leitungsenden 12.2 zu einem Steckerelement 12.5 geführt und mit diesem verbunden sind. Das Steckerelement 12.5 kann dann auf einen Gegenstecker der Leiterplatte 63 aufgesteckt werden.

Figur 4 zeigt eine weitere Ausgestaltungsvariante. Wie diese Zeichnung zeigt, enden die Leitungsenden 12.2 der Anschlussleitungen 12.1 im Bereich hinter dem Dichtstück 71 und stehen über die Öffnung 25.1 der Durchführung 25 vor. In die das Dichtstück 71 bildende Vergussmasse 70 ist ein Stecker 80 eingebettet und mittels der Vergussmasse 70 unverlierbar darin gehalten. Der Stecker 80 besitzt eine Buchse 81, innerhalb der die Leitungsenden 12.2 enden. Dabei sind die Anschlussleitungen 12.1 durch einen Flansch 82 des Steckers 80 hindurchgeführt. Der Flansch 82 trägt Halteelemente 83. Die Halteelemente 83 sind in die Vergussmasse 70 des Dichtstücks 71 eingesetzt und hierin verankert. Vorzugsweise werden die Halteelemente 83 in der Vergussmasse 70 formschlüssig gehalten. Sie weisen zu diesem Zweck dann Ansätze auf, die quer zur Längserstreckung der Anschlussleitungen 12.1 von den Haltelementen 83 vorstehen.

Die Buchse 81 bildet einen Stecker zur Aufnahme einer Steckaufnahme 84. Die Steckaufnahme 84 ist auf der Leiterplatte 63 befestigt. Die Steckaufnahme 84 kann mit der Buchse verbunden, z.B. zusammengesteckt werden, so dass die Leitungsenden 12.2 und die Leiterplatte 63 elektrisch miteinander verbunden werden. An den Gegenstecker ist ein Kabel angeschlossen, welches zu der Leiterplatte 63 führt und dort angeschlossen ist.

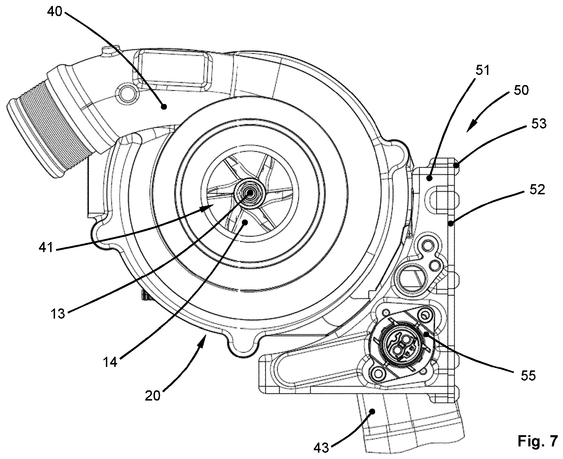

Figur 7 zeigt einen weiteren elektromotorisch betriebenen Verdichter in Form eines Abgas-Turboladers. Das Elektronikgehäuse 50 ist radial außen den dem Gehäuse 20 angeordnet. Das Elektronikgehäuse 50 umfasst das Gehäuse 20 teilweise in Umfangsrichtung. In einer solchen Ausgestaltungsvariante erstrecken sich die Anschlussleitungen 12.1 in einer Richtung senkrecht zur Achsrichtung, um in das radial außen an dem Gehäuse 20 angeordnete Elektronikgehäuse 50 geführt zu werden. Die Anschlussleitungen 12.1 können durch eine einzige Durchführung 25 aus dem Gehäuse 20 heraus in das Elektronikgehäuse 50 geführt werden oder jede Anschlussleitung 12.1 kann durch eine separate Durchführung 25 aus dem Gehäuse 20 heraus in das Elektronikgehäuse 50 geführt werden. In der in Figur 7 dargestellten Ausgestaltungsvariante ist das Elektronikgehäuse 50 an dem Gehäuse 20 angeschraubt.

Wie die vorstehenden Ausführungen veranschaulichen, betrifft die Erfindung einen Verdichter mit einer Antriebswelle , die mit einem Elektromotor gekoppelt ist und die ein Strömungsrad mittelbar oder unmittelbar antreibt, wobei der Elektromotor einen Stator aufweist, der in einem Gehäuse aufgenommen und darin befestigt ist, wobei der Stator über Anschlussleitungen an eine außerhalb des Gehäuses angeordnete Stromversorgung angeschlossen oder anschließbar ist, wobei die Stromversorgung außerhalb des Gehäuses in einem Aufnahmebereich eines Elektronikgehäuse untergebracht ist, und wobei ein Kühlkanal vorgesehen ist, der eine Zulaufleitung und eine Ablaufleitung aufweist und der dazu hergerichtet ist ein Kühlfluid, insbesondere eine Kühlflüssigkeit, zu führen. Um dabei eine kompakte Bauweise verwirklichen zu können, ist es erfindungsgemäß vorgesehen, dass das Gehäuse und das Elektronikgehäuse einteilig miteinander verbunden sind, und dass der Kühlkanal einen ersten Kühlkanalbereich aufweist, der zumindest bereichsweise zwischen dem Stator und dem Elektronikgehäuse angeordnet ist und der als Hohlraum in dem Gehäuse eingeformt ist. Durch diese Zuordnung des Kühlkanals 21 zu dem Stator 12 und dem Elektronikgehäuse 50 wird zudem auch eine besonders gute Kühlwirkung erzielt.

## Patentansprüche

1. Strömungsmaschine, insbesondere Verdichter oder Turbine, mit einer Antriebswelle (13), die mit einer elektrischen Maschine, insbesondere einem Elektromotor (10) oder einem Generator gekoppelt ist und die ein Strömungsrad, insbesondere ein Verdichterrad (14) oder ein Turbinenrad, mittelbar oder unmittelbar antreibt, wobei die elektrische Maschine (10) einen Stator (12) aufweist, der in einem Aufnahmeraum eines Gehäuses (20) aufgenommen und darin befestigt ist, wobei die Statorwicklungen des Stators (12) über Anschlussleitungen (12.1) an eine außerhalb des Gehäuses (20) angeordnete Stromversorgung (60) angeschlossen sind, wobei die Stromversorgung (60) außerhalb des Gehäuses (20) in einem Aufnahmebereich (54) eines Elektronikgehäuses (50) untergebracht ist, und wobei ein Kühlkanal (21) vorgesehen ist, der eine Zulaufleitung (28.1) und eine Ablaufleitung (28.2) aufweist und der dazu hergerichtet ist ein Kühlfluid, insbesondere eine Kühlflüssigkeit, zu führen,
wobei das Gehäuse (20) und das Elektronikgehäuse (50) miteinander verbunden, vorzugsweise einteilig miteinander verbunden sind, und wobei der Kühlkanal (21)
einen Kühlkanalbereich (21.3, 21.4) aufweist, der zumindest bereichsweise zwischen dem Stator (12) und dem Elektronikgehäuse (50) angeordnet ist und der als Hohlraum in dem Gehäuse (20) eingeformt ist,
wobei das Gehäuse (20) und das Elektronikgehäuse (50) einen gemeinsamen Gehäuseboden (26) aufweisen, und wobei sich der Kühlkanal (21) zumindest bereichsweise innerhalb des Gehäusebodens (26) erstreckt,
wobei der Kühlkanal (21) auf seiner dem Stator (12) zugewandten Seite von einem Wandbereich (26.3) des Gehäuses (20), insbesondere des Gehäusebodens (26), begrenzt ist,
wobei der Stator (12) in dem Gehäuse (20) zumindest teilweise in eine Vergussmasse (70) eingebettet ist, wobei die Vergussmasse (70) in Kontakt mit dem Gehäuse (20), vorzugsweise mit dem Gehäuseboden (26), steht, und
wobei die Vergussmasse (70) den Stator (12) zumindest teilweise aufnimmt, und ein Dichtstück (71) bildet, welches die Anschlussleitungen der Statorwicklungen der elektrischen Maschine gegenüber einer Durchführung (25) des Gehäuses abdichtet,
**dadurch gekennzeichnet,**
**dass** an den Wandbereich (26.3) wenigstens ein Vorsprung (26.1) angeformt ist, der über den Wandbereich (26.3) in den Aufnahmeraum des Gehäuses (20) übersteht und den Statorkern (12.4) berührt.

2. Strömungsmaschine nach Anspruch 1, **dadurch gekennzeichnet, dass** die Projektionen des Stators (12) und des Kühlkanals (21) in Achsrichtung der Antriebswelle (13) in sich einer gemeinsamen Ebene zumindest bereichsweise überlappen,
und/oder, dass die Projektionen des Aufnahmebereichs (54) oder der im Aufnahmebereich (54) angeordneten Stromversorgung (60) und des Kühlkanals (21) in Achsrichtung der Antriebswelle (13) sich in einer gemeinsamen Ebene zumindest bereichsweise überlappen.

3. Strömungsmaschine nach Anspruch 1 oder 2, **dadurch gekennzeichnet, dass** der Kühlkanal (21) einen zweiten Kühlkanal-Bereich (21.4) aufweist, der zumindest bereichsweise in Umfangsrichtung um den Stator (12) herum angeordnet ist und/oder dass der Kühlkanal (21) einen ersten Kühlkanal-Bereich (21.3) aufweist, der zumindest bereichsweise auf der dem Strömungsrad (14) abgewandten Seite des Stators (12) angeordnet ist.

4. Strömungsmaschine nach Anspruch 3, **dadurch gekennzeichnet, dass** der erste Kühlkanalbereich (21.3) und der zweite Kühlkanalbereich (21.4) des Kühlkanals (21) bei einem Schnitt durch die Achse der Antriebswelle (13) in Schnittansicht unter Bildung eines gemeinsamen Hohlraums ineinander übergehen,
oder dass der erste Kühlkanalbereich (21.3) und der zweite Kühlkanalbereich (21.4) des Kühlkanals (21) von zwei räumlich getrennten Kanalstrukturen gebildet sind.

5. Strömungsmaschine nach einem der Ansprüche 1 bis 4, **dadurch gekennzeichnet, dass** der Kühlkanal (21) auf seiner dem Elektronikgehäuse (50) zugewandten Seite von einem Wandabschnitt (26.2) des Gehäuses (20), insbesondere des Gehäusebodens (26), begrenzt ist.

6. Strömungsmaschine nach Anspruch 5, **dadurch gekennzeichnet, dass** auf der dem Kühlkanal (21) abgewandten Seite des Wandabschnitts (26.2) eine elektrische Komponente, insbesondere ein Teil der Stromversorgung (60), angeordnet ist, wobei vorzugsweise vorgesehen ist, dass die elektrische Komponente den Wandabschnitt (26.2) kontaktiert.

7. Strömungsmaschine nach Anspruch 5 oder 6, **dadurch gekennzeichnet, dass** an den Wandabschnitt (26.2) und/oder den Wandbereich (26.3) wenigstens ein Vorsprung (26.1) angeformt ist, der über den Wandabschnitt (26.2) und/oder den Wandbereich (26.3) übersteht und der in den Kühlkanal (21) hineinragt.

8. Strömungsmaschine nach Anspruch 7, **dadurch gekennzeichnet, dass** eine Befestigungsaufnahme (26.4) im Wandabschnitt (26.2) vorgesehen ist, die sich bis in den Vorsprung (26.1) hinein erstreckt und die von dem Aufnahmebereich (54) des Elektronikgehäuses (50) her zugänglich ist, und dass ein Befestigungsmittel (62) in die Befestigungsaufnahme (26.4) eingesetzt ist, insbesondere zur Befestigung der Stromversorgung (60) oder eines Teils der Stromversorgung (60) an dem Wandabschnitt (26.2),
und/oder dass eine Befestigungsaufnahme im Wandbereich (26.3) vorgesehen ist, die sich bis in den Vorsprung (26.1) hinein erstreckt und die von dem Aufnahmeraum des Gehäuses (20) her zugänglich ist, und dass ein Befestigungsmittel in die Befestigungsaufnahme eingesetzt ist, insbesondere zur Befestigung des Stators (12) an dem Wandbereich (26.3).

9. Strömungsmaschine nach einem der Ansprüche 1 bis 8, **dadurch gekennzeichnet, dass** die in Achsrichtung der Antriebswelle (13) verlaufende Wandstärke des Wandabschnitts (26.2) und/oder die in Achsrichtung der Antriebswelle (13) verlaufende Wandstärke des Wandbereichs (26.3) mindestens 2,5 mm und maximal 4 mm beträgt, wobei das den Wandabschnitt (26.2) bildende Material und/oder das den Wandbereich (26.3) bildende Material ein nicht magnetisierbarer Metallwerkstoff, insbesondere Aluminium bzw. eine Aluminiumlegierung, Titan bzw. eine Titanlegierung, Magnesium bzw. eine Magnesiumlegierung oder Kunststoff, insbesondere ein faserverstärkter Kunststoff ist

10. Strömungsmaschine nach einem der Ansprüche 1 bis 9, **dadurch gekennzeichnet, dass** auf der Antriebswelle (13) ein Strömungsrad (14) drehfest befestigt ist.

11. Strömungsmaschine nach einem der Ansprüche 1 bis 10, **dadurch gekennzeichnet, dass** die Vergussmasse (70) eine Wärmeleitfähigkeit im Bereich zwischen 0,5 W/(m*K) und 5 W/(m*K) aufweist.

12. Strömungsmaschine nach einem der Ansprüche 1 bis 11, **dadurch gekennzeichnet, dass** das Elektronikgehäuse (50) eine Seitenwand (51) aufweist, die gegenüberliegend dem Gehäuse (20) eine Öffnung bildet, wobei die Öffnung von einer vorzugsweise abnehmbaren Abdeckung (52) verschlossen ist, wobei bevorzugt die Seitenwand (51) einen seitlichen Durchbruch (57) zur Aufnahme einer Stromzuleitung (56) aufweist.

13. Strömungsmaschine nach einem der Ansprüche 1 bis 12, **dadurch gekennzeichnet, dass** das Gehäuse (20) gegenüberliegend dem Elektronikgehäuse (50) eine Öffnung bildet, wobei die Öffnung von einem, vorzugsweise abnehmbaren Deckel (30) verschlossen ist.

## Claims

1. Turbomachine, in particular compressor or turbine, having a drive shaft (13) which is coupled to an electrical machine, in particular an electric motor (10) or a generator, and which drives a flow wheel, in particular a compressor wheel (14) or a turbine wheel, indirectly or directly, the electrical machine (10) having a stator (12) which is accommodated in a receiving space of a housing (20) and is fastened therein, the stator windings of the stator (12) being connected via connecting leads (12.1) to a power supply (60) arranged outside the housing (20), the power supply (60) being accommodated outside the housing (20) in a receiving region (54) of an electronics housing (50), and a cooling channel (21) being provided which has an inlet line (28.1) and an outlet line (28.2) and which is designed to carry a cooling fluid, in particular a cooling liquid,
wherein the housing (20) and the electronics housing (50) are connected to one another, preferably integrally connected to one another, and wherein the cooling channel (21) has a cooling channel region (21.3, 21.4) which is arranged at least partially between the stator (12) and the electronics housing (50) and which is molded as a cavity in the housing (20),
wherein the housing (20) and the electronics housing (50) have a common housing bottom (26), and wherein the cooling channel (21) extends at least partially within the housing bottom (26),
wherein the cooling channel (21) is bounded on its side facing the stator (12) by a wall region (26.3) of the housing (20), in particular of the common housing bottom (26),
the stator (12) being at least partially embedded in a potting compound (70) in the housing (20), the potting compound (70) being in contact with the housing (20), preferably with the housing bottom (26), and
wherein the potting compound (70) at least partially accommodates the stator (12) and forms a sealing piece (71) which seals the connecting leads of the stator windings of the electrical machine with respect to a bushing (25) of the housing,
**characterized**
**in that** at least one projection (26.1) is formed on the wall region (26.3) and projects beyond the wall region (26.3) into the receiving space of the housing (20) and contacts the stator core (12.4).

2. Turbomachine according to claim 1, **characterized in that** the projections of the stator (12) and of the cooling channel (21) in the axial direction of the drive shaft (13) overlap at least in some areas in a common plane,
and/or that the projections of the receiving region (54) or of the power supply (60) arranged in the receiving region (54) and of the cooling channel (21) in the axial direction of the drive shaft (13) overlap at least in some areas in a common plane.

3. Turbomachine according to claim 1 or 2, **characterized in that** the cooling channel (21) has a second cooling channel region (21.4) which is arranged around the stator (12) at least in some regions in the circumferential direction and/or
**in that** the cooling channel (21) has a first cooling channel region (21.3), which is arranged at least in some regions on the side of the stator (12) facing away from the flow wheel (14).

4. Turbomachine according to claim 3, **characterized in that** the first cooling channel region (21.3) and the second cooling channel region (21.4) of the cooling channel (21) merge into one another in a sectional view through the axis of the drive shaft (13), forming a common cavity,
or **in that** the first cooling channel region (21.3) and the second cooling channel region (21.4) of the cooling channel (21) are formed by two spatially separate channel structures.

5. Turbomachine according to one of claims 1 to 4, **characterized in that** the cooling channel (21) is bounded on its side facing the electronics housing (50) by a wall section (26.2) of the housing (20), in particular of the housing bottom (26).

6. Turbomachine according to claim 5, **characterized in that** an electrical component, in particular a part of the power supply (60), is arranged on the side of the wall section (26.2) facing away from the cooling channel (21), it being preferably provided that the electrical component contacts the wall section (26.2).

7. Turbomachine according to claim 5 or 6, **characterized in that** at least one projection (26.1) is formed on the wall section (26.2) and/or the wall region (26.3), which projection projects beyond the wall section (26.2) and/or the wall region (26.3) and which projects into the cooling channel (21).

8. Turbomachine according to claim 7, **characterized in that** a fastening receptacle (26.4) is provided in the wall section (26.2), which extends into the projection (26.1) and which is accessible from the receiving region (54) of the electronics housing (50), and **in that** a fastening means (62) is inserted into the fastening receptacle (26.4), in particular for fastening the power supply (60) or part of the power supply (60) to the wall section (26.2),
and/or **in that** a fastening receptacle is provided in the wall region (26.3), which extends into the projection (26.1) and which is accessible from the receiving space of the housing (20), and **in that** a fastening means is inserted into the fastening receptacle, in particular for fastening the stator (12) to the wall region (26.3).

9. Turbomachine according to one of claims 1 to 8, **characterized in that** the wall thickness of the wall section (26.2) extending in the axial direction of the drive shaft (13) and/or the wall thickness of the wall region (26.3) extending in the axial direction of the drive shaft (13) is at least 2.5 mm and at most 4 mm, wherein the material forming the wall section (26. 2) and/or the material forming the wall region (26.3) is a non-magnetizable metal material, in particular aluminum or an aluminum alloy, titanium or a titanium alloy, magnesium or a magnesium alloy or plastic, in particular a fiber-reinforced plastic

10. Turbomachine according to one of claims 1 to 9, **characterized in that** a flow wheel (14) is non-rotatably mounted on the drive shaft (13).

11. Turbomachine according to one of claims 1 to 10, **characterized in that** the potting compound (70) has a thermal conductivity in the range between 0.5 W/(m*K) and 5 W/(m*K).

12. Turbomachine according to one of claims 1 to 11, **characterized in that** the electronics housing (50) has a side wall (51) which forms an opening opposite the housing (20), the opening being closed by a preferably removable cover (52), the side wall (51) preferably having a lateral opening (57) for receiving a power supply line (56).

13. Turbomachine according to one of claims 1 to 12, **characterized in that** the housing (20) forms an opening opposite the electronics housing (50), the opening being closed by a, preferably removable, cover (30).

## Revendications

1. Turbomachine, en particulier compresseur ou turbine, comprenant un arbre d'entraînement (13) qui est couplé à une machine électrique, en particulier un moteur électrique (10) ou un générateur, et qui entraîne directement ou indirectement une roue de flux, en particulier une roue de compresseur (14) ou une roue de turbine, la machine électrique (10) comprenant un stator (12) qui est reçu dans un espace de réception d'un boîtier (20) et y est fixé, les enroulements du stator (12) étant reliés par des lignes de raccordement (12. 1) à une alimentation électrique (60) disposée à l'extérieur du boîtier (20), l'alimentation électrique (60) étant logée à l'extérieur du boîtier (20) dans une zone de réception (54) d'un boîtier électronique (50), et un canal de refroidissement (21) étant prévu, qui présente une conduite d'arrivée (28.1) et une conduite de sortie (28.2) et qui est conçu pour conduire un fluide de refroidissement, notamment un liquide de refroidissement,
le boîtier (20) et le boîtier électronique (50) étant reliés l'un à l'autre, de préférence d'une seule pièce, et le canal de refroidissement (21) présentant une zone de canal de refroidissement (21.3, 21.4) qui est disposée au moins par zones entre le stator (12) et le boîtier électronique (50) et qui est formée comme espace creux dans le boîtier (20),
le boîtier (20) et le boîtier électronique (50) présentant un fond de boîtier (26) commun, et le canal de refroidissement (21) s'étendant au moins par zones à l'intérieur du fond de boîtier (26),
le canal de refroidissement (21) étant limité sur son côté tourné vers le stator (12) par une zone de paroi (26.3) du boîtier (20), en particulier du fond de boîtier (26),
le stator (12) étant noyé au moins partiellement dans une masse de scellement (70) dans le boîtier (20), la masse de scellement (70) étant en contact avec le boîtier (20), de préférence avec le fond de boîtier (26), et
la masse de scellement (70) recevant au moins partiellement le stator (12), et formant une pièce d'étanchéité (71) qui assure l'étanchéité des lignes de raccordement des enroulements du stator de la machine électrique par rapport à un passage (25) du boîtier,
**caractérisé**
**en ce qu'**au moins une saillie (26.1) est formée sur la zone de paroi (26.3), laquelle saillie dépasse de la zone de paroi (26.3) dans l'espace de réception du boîtier (20) et touche le noyau de stator (12.4).

2. Turbomachine selon la revendication 1, **caractérisée en ce que** les projections du stator (12) et du canal de refroidissement (21) dans la direction axiale de l'arbre d'entraînement (13) se chevauchent au moins par zones dans un plan commun,
et/ou **en ce que** les projections de la zone de réception (54) ou de l'alimentation électrique (60) disposée dans la zone de réception (54) et du canal de refroidissement (21) dans la direction axiale de l'arbre d'entraînement (13) se chevauchent au moins par zones dans un plan commun.

3. Turbomachine selon la revendication 1 ou 2, **caractérisée en ce que** le canal de refroidissement (21) présente une deuxième zone de canal de refroidissement (21.4) qui est disposée autour du stator (12) au moins par zones dans la direction périphérique et/ou
que le canal de refroidissement (21) présente une première zone de canal de refroidissement (21.3) qui est disposée au moins par zones sur le côté du stator (12) opposé à la roue d'écoulement (14).

4. Turbomachine selon la revendication 3, **caractérisée en ce que** la première zone de canal de refroidissement (21.3) et la deuxième zone de canal de refroidissement (21.4) du canal de refroidissement (21) se rejoignent en vue en coupe à travers l'axe de l'arbre d'entraînement (13) en formant un espace creux commun,
ou **en ce que** la première zone de canal de refroidissement (21.3) et la deuxième zone de canal de refroidissement (21.4) du canal de refroidissement (21) sont formées par deux structures de canal séparées dans l'espace.

5. Turbomachine selon l'une des revendications 1 à 4, **caractérisée en ce que** le canal de refroidissement (21) est délimité sur son côté tourné vers le boîtier électronique (50) par une section de paroi (26.2) du boîtier (20), en particulier du fond de boîtier (26).

6. Turbomachine selon la revendication 5, **caractérisée en ce qu'**un composant électrique, en particulier une partie de l'alimentation électrique (60), est disposé sur le côté de la section de paroi (26.2) opposé au canal de refroidissement (21), et **il** est de préférence prévu que le composant électrique soit en contact avec la section de paroi (26.2).

7. Turbomachine selon la revendication 5 ou 6, **caractérisée en ce qu'**au moins une saillie (26.1) est formée sur la section de paroi (26.2) et/ou la zone de paroi (26.3), qui dépasse de la section de paroi (26.2) et/ou de la zone de paroi (26.3) et qui pénètre dans le canal de refroidissement (21).

8. Turbomachine selon la revendication 7, **caractérisée en ce qu'**un logement de fixation (26.4) est prévu dans la section de paroi (26.2), qui s'étend jusque dans la saillie (26.1) et qui est accessible depuis la zone de réception (54) du boîtier électronique (50), et **en ce qu'**un moyen de fixation (62) est inséré dans le logement de fixation (26.4), notamment pour fixer l'alimentation électrique (60) ou une partie de l'alimentation électrique (60) sur la section de paroi (26.2),
et/ou **en ce qu'**un logement de fixation est prévu dans la zone de paroi (26.3), qui s'étend jusque dans la saillie (26.1) et qui est accessible depuis l'espace de réception du boîtier (20), et **en ce qu'**un moyen de fixation est inséré dans le logement de fixation, en particulier pour fixer le stator (12) à la zone de paroi (26.3).

9. Turbomachine selon l'une des revendications 1 à 8, **caractérisée en ce que** l'épaisseur de paroi de la section de paroi (26.2) s'étendant dans la direction axiale de l'arbre d'entraînement (13) et/ou l'épaisseur de paroi de la zone de paroi (26.3) s'étendant dans la direction axiale de l'arbre d'entraînement (13) est d'au moins 2,5 mm et d'au plus 4 mm, le matériau formant la section de paroi (26. 2) et/ou le matériau formant la zone de paroi (26.3) est un matériau métallique non magnétisable, en particulier de l'aluminium ou un alliage d'aluminium, du titane ou un alliage de titane, du magnésium ou un alliage de magnésium ou une matière plastique, en particulier une matière plastique renforcée par des fibres.

10. Turbomachine selon l'une des revendications 1 à 9, **caractérisée en ce qu'**une roue d'écoulement (14) est fixée en rotation sur l'arbre d'entraînement (13).

11. Turbomachine selon l'une des revendications 1 à 10, **caractérisée en ce que** la masse de scellement (70) présente une conductivité thermique comprise entre 0,5 W/(m*K) et 5 W/(m*K).

12. Turbomachine selon l'une des revendications 1 à 11, **caractérisée en ce que** le boîtier électronique (50) comporte une paroi latérale (51) formant une ouverture en regard du boîtier (20), l'ouverture étant fermée par un couvercle (52) de préférence amovible, de préférence la paroi latérale (51) comportant une ouverture latérale (57) destinée à recevoir une ligne d'alimentation électrique (56).

13. Turbomachine selon l'une des revendications 1 à 12, **caractérisée en ce que** le boîtier (20) forme une ouverture en regard du boîtier électronique (50), l'ouverture étant fermée par un couvercle (30), de préférence amovible.
